# NEUE EUROPÄISCHE PATENTSCHRIFT

(11) **EP 2 633 502 B2**
(45) Veröffentlichungstag und Bekanntmachung des Hinweises auf die Entscheidung über den Einspruch: **27.12.2023**
(45) Hinweis auf die Patenterteilung: 26.04.2017
(21) Anmeldenummer: 11785321.8
(22) Anmeldetag: 21.10.2011
(51) Int. Cl.: G07C 9/00, B60R 25/00, E05B 65/00, E05F 15/00, B60R 25/20, B60R 25/01

(54) **SENSOREINHEIT ZUM BERÜHRUNGSLOSEN BETÄTIGEN EINER FAHRZEUGTÜR**
SENSOR UNIT FOR CONTACTLESSLY ACTUATING A VEHICLE DOOR
UNITÉ DE CAPTEUR POUR L'ACTIONNEMENT SANS CONTACT D'UNE PORTE DE VÉHICULE

(30) Priorität: 26.10.2010 DE 102010049400
(43) Veröffentlichungstag der Anmeldung: 04.09.2013
(73) Patentinhaber: Brose Fahrzeugteile GmbH & Co. Kommanditgesellschaft, Bamberg, 96052 Bamberg (DE)
(72) Erfinder: HOLZBERG, Frank, 97486 Königsberg (DE); SCHNEIDER, Karl, 74354 Besigheim (DE)
(74) Vertreter: FDST Patentanwälte
(86) Internationale Anmeldenummer: PCT/EP2011/005317
(87) Internationale Veröffentlichungsnummer: WO 2012/055518

(56) Entgegenhaltungen:
- EP-A1- 1 789 645
- WO-A1-2011/092341
- WO-A1-2012/052210
- DE-A1-102008 063 366
- DE-A1-102009 017 404

## Beschreibung

Die Erfindung bezieht sich auf eine Sensoreinheit zum berührungslosen Betätigen, d.h. zum Öffnen und/oder Schließen einer Fahrzeugtür, insbesondere einer Heckklappe.

Für einen Benutzer eines Fahrzeugs ist es mitunter wünschenswert, eine Fahrzeugtür, insbesondere die Heckklappe eines Kofferraums, berührungslos zu öffnen oder zu schließen. Dies ist zum Beispiel der Fall, wenn der Benutzer beide Hände einsetzt, um einen Gegenstand wie zum Beispiel einen Bierkasten zu tragen, der in den Kofferraum des Fahrzeugs gelegt werden soll.

In der Entwicklung begriffen sind derzeit Sensoreinheiten mit Näherungssensoren, die im hinteren Stoßfänger des Fahrzeugs angeordnet sind und eine Fußbewegung des Benutzers als Türöffnungswunsch detektieren können, worauf durch ein mit den Näherungssensoren signaltechnisch verbundenes Steuergerät ein Auslösesignal zum selbsttätigen Öffnen (oder auch Schließen) des Kofferraums ausgegeben wird. Solche Sensoreinheiten sind häufig darauf ausgelegt, das Auslösesignal auszugeben, wenn der Benutzer seinen Fuß unter den Stoßfänger streckt. Derartige Sensoreinheiten sind beispielsweise aus DE 10 2009 017 404 A1 oder aus DE 10 2008 063 366 A1 bekannt.

Wünschenswerterweise soll eine solche Sensoreinheit in der Lage sein, eine bestimmte charakteristische Fußbewegung, mit der der Türöffnungswunsch angezeigt werden soll, sicher von anderen Fußbewegungen zu unterscheiden. Beispielsweise soll die Sensoreinheit die Kofferraumöffnung veranlassen, wenn der Fahrzeugbenutzer eine Kickbewegung in Fahrzeuglängsrichtung unter den Stoßfänger vollführt, während die Kofferraumöffnung unterbleiben soll, wenn der Fahrzeugnutzer seinen Fuß quer zum Fahrzeug bewegt. Hierdurch soll insbesondere vermieden werden, dass die Kofferraumöffnung fehlerhaft ausgelöst wird, wenn der Fahrzeugnutzer um das Fahrzeug herumgeht.

Der Erfindung liegt die Aufgabe zugrunde, eine Sensoreinheit zum berührungslosen Betätigen einer Fahrzeugtür anzugeben, welche hinsichtlich ihrer Fehleranfälligkeit verbessert ist.

Diese Aufgabe wird erfindungsgemäß gelöst durch die Merkmale des Anspruchs 1.
Danach ist eine Sensoreinheit zum berührungslosen Betätigen einer Fahrzeugtür eines Fahrzeugs vorgesehen, welche mindestens einen ersten Näherungssensor und mindestens einen zweiten Näherungssensor umfasst. Jeder der beiden Näherungssensoren weist ein sich im Wesentlichen in einer Y-Richtung erstreckendes, längliches Detektionsfeld auf. Dabei ragt das Detektionsfeld des ersten Näherungssensors über das Detektionsfeld des zweiten Näherungssensors in Y-Richtung zumindest einseitig um eine nachfolgend als "Überstand" bezeichnete Länge hinaus. Die Detektionsfelder der mindestens zwei Näherungssensoren sind vorzugsweise quer zu der Y-Richtung voneinander beabstandet und verlaufen dabei insbesondere etwa parallel zueinander.

Der Begriff "Detektionsfeld" bezeichnet allgemein die messempfindliche Fläche des jeweiligen Näherungsdetektors, also diejenige Fläche, innerhalb der der jeweilige Näherungssensor die Annäherung eines Fahrzeugnutzers detektiert. Die mindestens zwei Näherungssensoren sind bevorzugt als kapazitive Näherungssensoren ausgebildet. In diesem Fall handelt es sich bei dem oder jedem Detektionsfeld zweckmäßigerweise um eine flächige Elektrode, über die - in der für kapazitive Sensoren typischen Weise - ein elektrisches Feld in den umgebenden Raum abgestrahlt wird, wobei dieses elektrische Feld bei Annäherung eines Fahrzeugnutzers durch dessen Körpergewebe messbar beeinflusst wird. Denkbar ist jedoch auch, einen oder jeden der Näherungssensoren als optischen Näherungssensor oder Ultraschall-Näherungssensor auszubilden.

Das Detektionsfeld des ersten Näherungssensors ist nachfolgend als erstes Detektionsfeld bezeichnet. Das Detektionsfeld des zweiten Näherungssensors ist entsprechend nachfolgend als zweites Detektionsfeld bezeichnet.

In der bevorzugten Anwendung handelt es sich bei der zu öffnenden Fahrzeugtür um eine Heckklappe. Die Sensoreinheit ist hierbei zweckmäßigerweise in ihrer bestimmungsgemäßen Einbausituation im hinteren Stoßfänger des Fahrzeugs angeordnet. In diesem Fall ist die Y-Richtung, entlang der die Detektionsfelder der mindestens zwei Näherungssensoren ihrer Längserstreckung nach ausgerichtet sind, bevorzugt parallel zu der Fahrzeugquerrichtung orientiert. Grundsätzlich kann die erfindungsgemäße Sensoreinheit aber auch zum berührungslosen Öffnen anderer Fahrzeugtüren eingesetzt werden. Insbesondere in diesem Fall kann die Y-Richtung in der Einbausituation der Sensoreinheit auch eine andere Orientierung bezüglich des Fahrzeugs einnehmen. In jedem Fall sind die Näherungssensoren bevorzugt aber nahe der zu öffnenden Fahrzeugtür angeordnet.

Die beiden weiteren zu der Y-Richtung sowie zueinander senkrechten Raumachsen sind nachfolgend als X-Richtung und Z-Richtung bezeichnet. In dem bevorzugten Anwendungsfall, in dem die Y-Richtung in der Einbausituation der Sensoreinheit parallel zu der Fahrzeugquerrichtung ausgerichtet ist, ist die X-Richtung parallel zu der Fahrzeuglängsrichtung ausgerichtet. Die Z-Richtung ist in diesem Fall entsprechend vertikal und somit parallel zu der Fahrzeughochachse ausgerichtet.

Durch die unterschiedlich ausgeprägte Längserstreckung der mindestens zwei Detektionsfelder wird erreicht, dass sich verschiedenartige Bewegungen, insbesondere Beinbewegungen eines Fahrzeugnutzers im Erfassungsraum der Näherungssensoren in unterschiedlicher Weise in dem von dem ersten Näherungssensor bzw. zweiten Näherungssensor erzeugten Signalverlauf wiederspiegeln. Durch Auswertung der von den mindestens zwei Näherungssensoren erzeugten Signale kann daher auf die Art der den Signalverlauf hervorrufenden Bewegung geschlossen werden. Insbesondere kann hierbei präzise zwischen einer in Y-Richtung gerichteten Bewegung und einer in X- oder Z-Richtung gerichteten Bewegung unterschieden werden, wodurch ein Türöffnungswunsch eines Fahrzeugnutzers präzise und - zumindest nahezu - fehlerfrei erkannt werden kann.

Die Eignung der Sensoreinheit zur Unterscheidung verschiedener Bewegungstypen ist im Rahmen der Erfindung grundsätzlich schon gegeben, wenn das erste Detektionsfeld nur einseitig über das zweite Detektionsfeld hinausragt. Eine verbesserte Sensitivität der Sensoreinheit zur Unterscheidung verschiedenartiger Bewegungen wird aber durch eine bevorzugte Ausführungsform der Sensoreinheit erreicht, bei der das erste Detektionsfeld das zweite Detektionsfeld beidendseitig überragt. Der Überstand des ersten Sensorfeldes über das zweite Sensorfeld kann hierbei an den beiden Längsenden unterschiedlich sein. Aus Symmetriegründen, insbesondere im Sinne einer vereinfachten Auswertbarkeit der Sensorsignale ist der Überstand aber bevorzugt an beiden Längsenden der Detektionsfelder gleich gewählt. Das erste Sensorfeld ragt also vorzugsweise mit beiden Längsenden etwa um dieselbe Länge über das zweite Sensorfeld hinaus.

Für eine präzise und fehlerfreie Erkennung einer einen Türöffnungswunsch anzeigenden Kickbewegung hat es sich als besonders vorteilhaft erwiesen, den Überstand derart zu wählen, dass er mindestens 5%, bevorzugt mindestens 10% der Länge des ersten Detektionsfeldes entspricht. Dabei beträgt der Überstand aber maximal 33% der Länge des ersten Detektionsfelds. Bei einer beispielhaften Länge des ersten Detektionsfeldes von ca. 80 cm ragt das erste Detektionsfeld z.B. ca. 10 cm über das zweite Detektionsfeld hinaus.

In der Einbausituation der Sensoreinheit in einem Fahrzeug ist das längere erste Detektionsfeld über dem kürzeren zweiten Detektionsfeld angeordnet. Grundsätzlich ist aber auch möglich, das erste Detektionsfeld unterhalb des zweiten Detektionsfeldes anzuordnen.

Die Sensoreinheit umfasst zusätzlich eine Steuereinheit, die Signale der Näherungssensoren auswertet und ein die Betätigung der Fahrzeugtür veranlassendes Auslösesignal ausgibt, wenn sie anhand der ausgewerteten Sensorsignale eine einen Türöffnungswunsch eines Fahrzeugnutzers anzeigende Bewegung erkennt. Die Steuereinheit, die in zweckmäßiger Ausbildung einen Mikroprozessor mit einer darin implementierten Steuersoftware umfasst, ist dabei schaltungs- und/oder programmtechnisch dazu ausgebildet, mindestens einen Zeitversatz zwischen den jeweiligen Signalen der beiden Näherungssensoren zu detektieren, und das Auslösesignal dann auszugeben, wenn der oder jeder detektierte Zeitversatz ein vorgegebenes Auslösekriterium erfüllt.

Das Auslösekriterium ist dabei in einer vorteilhaften Gestaltung der Erfindung dahingehend vorgegeben, dass die Steuereinheit das Auslösesignal nur dann auslöst, wenn der oder jeder Zeitversatz einen jeweils zugeordneten Maximalwert unterschreitet. In beispielhafter Ausgestaltung ist dieser Maximalwert empirisch, insbesondere anhand von Versuchsreihen, derart festgelegt, dass das Auslösekriterium bei einer typischen Kickbewegung eines Fahrzeugnutzers in X-Richtung erfüllt wird, wohingegen die Auslösebedingung bei einer Beinbewegung in Y-Richtung nicht erfüllt wird. Grundsätzlich ist allerdings auch möglich, das Auslösekriteriums derart vorzugeben, dass es bei einer typischen Kickbewegung eines Fahrzeugnutzers in X-Richtung nicht erfüllt wird, wohingegen es bei einer Beinbewegung in Y-Richtung erfüllt wird.

Um eine Fehlauslösung der Sensoreinheit durch unberechtigte Personen oder z.B. durch Tiere auszuschließen, ist die Sensoreinheit vorzugsweise mit einem vollautomatisch öffnenden Türschließsystem ("Keyless Go") gekoppelt, das eine Öffnung der Fahrzeugtür nur dann freigibt, wenn das Türschließsystem - zum Beispiel durch einen Funkschlüssel des Fahrzeugnutzers - entriegelt ist.

Nachfolgend wird ein Ausführungsbeispiel der Erfindung anhand einer Zeichnung näher erläutert. Darin zeigen:
- Fig. 1: in einer grob schematischen Seitenansicht ein Heckteil eines Kraftfahrzeugs, welches mit einer Sensoreinheit zum berührungslosen Betätigen einer Heckklappe versehen ist, sowie ein Bein eines sich annähernden Fahrzeugnutzers,
- Fig. 2: in einer schematischen Rückansicht das Kraftfahrzeug, die Sensoreinheit gemäß Fig. 1 sowie wiederum das Bein des Fahrzeugnutzers,
- Fig. 3: einen zeitlichen Verlauf der von zwei kapazitiven Näherungssensoren der Sensoreinheit jeweils während einer Fußbewegung Fahrzeuglängsrichtung erzeugten Signale, und
- Fig. 4: in Darstellung gemäß Fig. 3 den zeitlichen Verlauf der von den beiden Näherungssensoren während einer Fußbewegung in Fahrzeugquerrichtung erzeugten Signale.

Einander entsprechende Teile und Größen sind in allen Figuren stets mit den gleichen Bezugszeichen versehen.

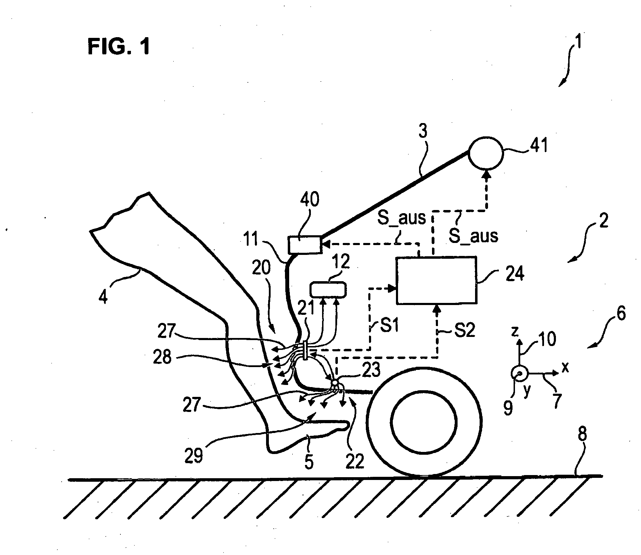

Fig. 1 zeigt einen heckseitigen (hinteren) Abschnitt eines Kraftfahrzeugs 1, welches mit einer Sensoreinheit 2 zum berührungslosen Betätigen einer Fahrzeugtür, hier einer Heckklappe 3, versehen ist. Zudem ist ein Bein 4 eines Fahrzeugnutzers dargestellt, welcher beabsichtigt, durch Bewegung seines Beins 4 und des zugehörigen Fußes 5 die Heckklappe 3 zu öffnen.

Weiterhin ist in Fig. 1 ein kartesisches Koordinatensystem 6 dargestellt, welches zur Definition des bestimmungsgemäßen Einbaus und der bestimmungsgemäßen Betätigung der Sensoreinheit 2 herangezogen wird. Dabei ist eine X-Richtung 7 des Koordinatensystems 6 parallel zu einem Boden 8, auf welchem das Kraftfahrzeug 1 steht, ausgerichtet und zeigt im Wesentlichen in Längsrichtung des Kraftfahrzeugs 1; eine Y-Richtung 9 ist ebenfalls parallel zum Boden 8 ausgerichtet und zeigt in Querrichtung des Kraftfahrzeugs 1 (aus der Zeichenebene heraus); eine Z-Richtung 10 des Koordinatensystems 6 steht schließlich senkrecht auf dem Boden 8.

Das Kraftfahrzeug 1 umfasst einen heckseitigen Stoßfänger 11, welcher im Wesentlichen an einem Querträger 12 der Fahrzeugkarosserie befestigt ist.

Die Sensoreinheit 2 umfasst einen ersten kapazitiven Näherungssensor 20 mit einem ersten Detektionsfeld in Form einer als längliche Metallfolie ausgebildeten Messelektrode 21. Die Sensoreinheit 2 umfasst des Weiteren einen zweiten kapazitiven Näherungssensor 22 mit einem zweiten Detektionsfeld in Form einer als länglicher Draht ausgebildeten Messelektrode 23. Die Sensoreinheit 2 umfasst außerdem eine Steuereinheit 24, die im Wesentlichen durch einen Mikrocontroller mit einer darin implementierten Steuersoftware gebildet ist.

Beide Messelektroden 21, 23 sind an einem unteren Bereich des Stoßfängers 11 angebracht, wobei die beiden Messelektroden 21, 23 sowohl in Z-Richtung 10 als auch in X-Richtung 7 zueinander beabstandet sind. Dabei ist die Messelektrode 21 oberhalb der Messelektrode 23 und bezüglich dieser näher an der Fahrzeugrückseite angeordnet.

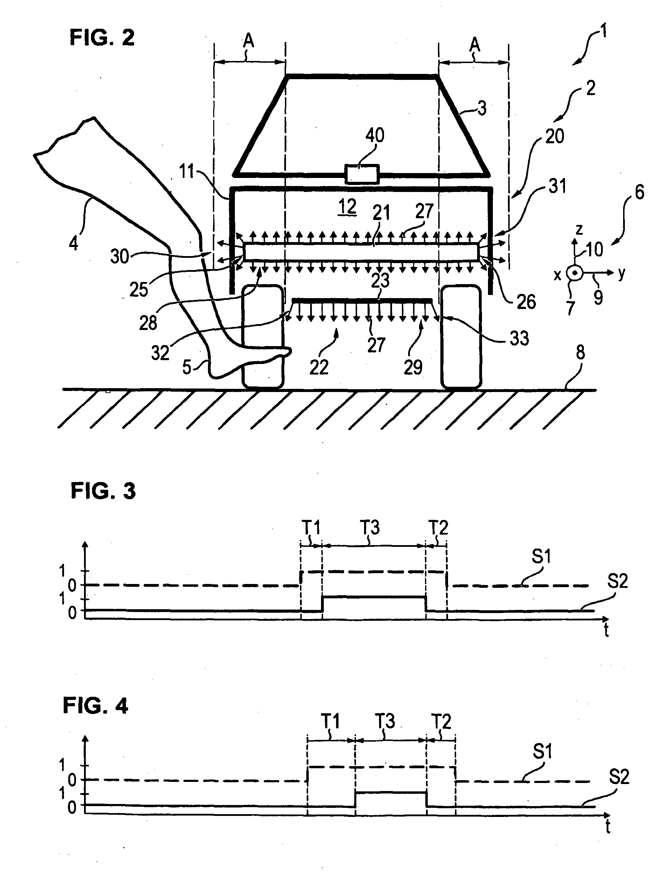

In Fig. 2 ist das Kraftfahrzeug 1 in einer Ansicht in X-Richtung 7 mit Blick auf die Fahrzeugrückseite dargestellt. Wie dieser Darstellung zu entnehmen ist, überragt die erste Messelektrode 21 mit ihren beiden Längsenden 25, 26 symmetrisch die zweite Messelektrode 23 in Y-Richtung 9 und erstreckt sich hierbei über einen Großteil der Breite des Kraftfahrzeugs 1. Beispielsweise hat die Messelektrode 21 eine Länge von etwa 80cm, während die zweite Messelektrode 23 eine Länge von etwa 60cm hat, so dass die Messelektrode 21 über die Messelektrode 23 beidendseitig um einen Überstand A von etwa 10cm übersteht.

Im Betrieb wird an die Messelektroden 21, 23 eine elektrische Spannung angelegt, unter deren Wirkung jeder der Näherungssensoren 20,22 in einem den Messelektroden 21, 23 vorgelagerten Raumvolumen (nachfolgend als Erfassungsraum 28 bzw. 29 bezeichnet) ein elektrisches Feld erzeugt. Das von den Messelektroden 21 und 23 jeweils erzeugte elektrische Feld ist in den Fig. 1 und 2 durch Feldlinien 27 angedeutet. Wie aus den Fig. 1 und 2 erkennbar ist, ist der Erfassungsraum 28 des Näherungssensors 20 der Rückseite des Stoßfängers 11 im Wesentlichen in X-Richtung außenseitig vorgelagert, während der Erfassungsraum 29 des Näherungssensors 22 den Stoßfänger 11 im Wesentlichen in Y-Richtung unterseitig flankiert.

Ein in dem jeweiligen Erfassungsraum 28,29 befindliches Körperteil, insbesondere ein Bein eines Fahrzeugnutzers, wirkt aufgrund der elektrischen Leitfähigkeit des menschlichen Körpergewebes und der Erdung des Körpergewebes mit dem Untergrund als Gegenelektrode zu der Messelektrode 21 bzw. 23. Jede der Messelektroden 21 und 23 bildet mit dem Körperteil somit einen (elektrischen) Kondensator, dessen Kapazität sich mit dem Abstand des Körperteils zu der jeweiligen Messelektrode 21,23 in charakteristischer Weise ändert.

Um einen Türöffnungswunsch eines Fahrzeugnutzers zu erkennen, erfasst die Steuereinheit 24 Signale S1 und S2 der Näherungssensoren 20, 22, die eine Information über die Anwesenheit eines Körperteils im Erfassungsraum 28 bzw. 29 beinhalten. In bevorzugter Ausgestaltung erfasst die Steuereinheit 24 die an den Messelektroden 21, 23 jeweils anliegende elektrische Spannung sowie den über die Messelektroden 21, 23 jeweils fließenden Strom. Aus diesen Strom- und Spannungswerten errechnet die Steuereinheit 24 ein zwischen der jeweiligen Messelektrode 21 bzw. 23 und Masse gebildetes Kapazitätsmaß, bei dem es sich entweder um die Kapazität selbst oder eine hiermit korrelierende Messgröße handelt. Die berechneten Kapazitätsmaße werden von der Steuereinheit 24 durch Vergleich mit einem hinterlegten Schwellwert in die (Stufen-)Signale S1 und S2 umgewandelt, die den Wert "1" annehmen, wenn sich im Erfassungsraum des jeweiligen Näherungssensors 20,22 ein Körperteil eines Fahrzeugnutzers befindet, und die in Abwesenheit eines solchen Körperteils den Wert "0" annehmen. Durch vorübergehende Bewegung eines Beines des Fahrzeugnutzers in den Erfassungraum 28, 29 eines der Näherungssensoren 20, 22 wird somit ein Signalpuls in dem jeweiligen Signal S1 bzw. S2 erzeugt, dessen steigende Flanke anzeigt, dass das Bein in den Erfassungsraum 28, 29 eindringt, und dessen fallende Flanke anzeigt, dass das bei aus dem Erfassungsraum 28, 29 zurückgezogen wird.

In Fig. 3 und Fig. 4 ist der typische Verlauf der Signale S1 und S2 der beiden Messelektroden 21 bzw. 23 gegen die Zeit t dargestellt, wie er sich für eine KickBewegung des Fahrzeugnutzers, d.h. eine Beinbewegung in X-Richtung (Fig. 3) bzw. für Seitwärtsbewegung, d.h. eine Beinbewegung in Y-Richtung ergibt. In beispielhafter Ausgestaltung der Sensoreinheit 2 soll die Kickbewegung einen Türöffnungswunsch des Fahrzeugnutzers anzeigen und entsprechend die Öffnung der Heccklappe 3 auslösen, während die Seitwärtsbewegung keine Türöffnung auslösen soll.

Charakteristisch für beide Signalverläufe ist hierbei, dass sich eine Beinbewegung in zeitlich korrelierenden Signalpulsen in beiden Signalen S1 und S2 niederschlägt. Der Signalpuls im Signal S1 ist hierbei zeitlich breiter als der Signalpuls in dem Signal S2 und rahmt den letzteren somit zeitlich ein, zumal das Bein in den Erfassungsraum 28 stets früher eindringt als in den Erfassungsraum 29, und diesen beim Zurückziehen des Beins auch wieder später verlässt. Zwischen den steigenden Flanken der Signale S1 und S2 ist somit stets ein gewisser Zeitversatz T1 gebildet. Entsprechend ist auch zwischen den fallenden Flanken der Signale S1 und S2 ein Zeitversatz T2 gebildet.

Bei der - dem Signalverlauf gemäß Fig. 3 zugrundeliegenden - Kickbewegung ist dieser Zeitversatz T1, T2 vergleichsweise klein, und wird im Wesentlichen durch den Versatz der Näherungssensoren 20 und 22 in X-Richtung bestimmt. Der Zeitversatz T1 bzw. T2 ist außerdem bei der Vorwärts- und Rückwärtsbewegung des Beines weitgehend symmetrisch. Die Werte des Zeitversatzes T1 der steigenden Flanke und des Zeitversatzes T2 der fallenden Flanke sind also etwa gleich groß.

Bei der- dem Signalverlauf gemäß Fig. 4 zugrundeliegenden - Seitwärtsbewegung wird der Zeitversatz T1, T2 zusätzlich durch die unterschiedliche Länge der Näherungssensoren 20 und 22 bestimmt. Der Zeitversatz T1, T2 ist hierdurch in der Regel asymmetrisch, wobei zumindest ein Zeitversatz T1 oder T2, in Fig. 4 beispielhaft der Zeitversatz T1, einen deutlich größeren Wert annimmt wie bei einer Kickbewegung.

Um eine Kickbewegung automatisch von einer Seitwärtsbewegung zu unterscheiden, und somit um einen Türöffnungswunsch fehlersicher zu erkennen, bestimmt die Steuereinheit 24 für die Signale S1 und S2 den Zeitversatz T1 und den Zeitversatz T2 und vergleicht die resultierenden Zeitversatzwerte mit jeweils hinterlegten Schwellwerten.

Sofern die Steuereinheit 24 weder den Zeitversatz T1 noch für den Zeitversatz T2 eine Schwellwertüberschreitung feststellt, gibt sie ein Auslösesignal Sa an ein elektromechanisches Schloss 40 der Heckklappe 3, sowie an einen der Heckklappe 3 zugeordneten Elektromotor 41 aus, so dass die Heckklappe 3 durch den Elektromotor 41 automatisch geöffnet wird.

Wird dieses Auslösekriterium nicht erfüllt, d.h. wenn entweder für den Zeitversatz T1 oder für den Zeitversatz T2 eine Schwellwertüberschreitung festgestellt wird, gibt die Steuereinheit 24 das Auslösesignal Sa nicht aus. Infolgedessen bleibt die Heckklappe 3 insbesondere dann geschlossen, wenn der Fahrzeugnutzer sein Bein unter dem Stoßfänger 11 seitwärts bewegt.

Die Sensoreinheit 2 selbst wird im Montagezustand zweckmäßigerweise durch ein vollautomatisch öffnendes Türschließsystem ("Keyless Go") aktiviert, wenn dieses - beispielsweise durch Funkkontakt mit einem RFID-Transponder im Autoschlüssel des Fahrzeugnutzers - die Annäherung des Fahrzeugnutzers an das Fahrzeug 1 erkennt. Auf diese Weise wird die Sensoreinheit energiesparend nur dann betrieben, wenn sich der Fahrzeugnutzer tatsächlich in unmittelbarer Nähe des Fahrzeugs 1 befindet. Gleichzeitig wird so auf einfache Weise ausgeschlossen, dass unberechtigte Personen die Heckklappe 3 öffnen können.

Für eine weiter verbesserte Erkennung des Türöffnungswunsches erfasst die Steuereinheit 24 in optionaler Gestaltung zusätzlich die Zeitspanne T3 zwischen dem Ende des Zeitversatzes T1 und dem Beginn des Zeitversatzes T2 als Maß für die Pulsdauer und vergleicht diese Zeitspanne T3 mit einem weiteren hinterlegten Schwellwert. Im Rahmen eines verfeinerten Auslösekriteriums gibt die Steuereinheit 24 das Auslösesignal Sa hierbei nur dann aus, wenn zusätzlich die Zeitspanne T3 den zugehörigen Schwellwert unterschreitet. Hierdurch wird die zur Anzeige des Türöffnungswunsches festgelegte schnelle Kickbewegung unterschieden von anderen Beinbewegungen, bei denen der Fahrzeugnutzer ein Bein in X-Richtung unter den Stoßfänger 11 schiebt und - beispielsweise beim Enteisen ("Kratzen") oder anderweitigem Säubern der Heckscheibe, beim Beladen eines Dach- oder Heckträgers, oder bei ähnlichen Tätigkeiten - erst nach längerer Zeit in X-Richtung wieder zurückzieht.

Anstelle des Elektromotors 41 kann auch eine Federeinheit vorgesehen sein, die die Heckklappe 3 unter Wirkung einer elastischen Rückstellkraft öffnet. In diesem Fall übermittelt die Steuereinheit 24 das Auslösesignal Sa nur an Schloss 40, das die die Heckklappe 3 daraufhin freigibt.

### Bezugszeichenliste

- 1: Kraftfahrzeug
- 2: Sensoreinheit
- 3: Heckklappe
- 4: Bein
- 5: Fuß
- 6: Koordinatensystem
- 7: X-Richtung
- 8: Boden
- 9: Y-Richtung
- 10: Z-Richtung
- 11: Stoßfänger
- 12: Querträger
- 20: Näherungssensor
- 21: Messelektrode
- 22: Näherungssensor
- 23: Messelektrode
- 24: Steuereinheit
- 25: Längsende
- 26: Längsende
- 27: Feldlinie
- 28: Erfassungsraum
- 29: Erfassungsraum
- 40: Schloss
- 41: Elektromotor

- A: Abstand
- S1: Signal
- S2: Signal
- Sa: Auslösesignal

- t: Zeit
- T1: Zeitversatz
- T2: Zeitversatz
- T3: Zeitspanne

## Patentansprüche

1. Sensoreinheit (2) zum berührungslosen Betätigen einer Fahrzeugtür (3) eines Fahrzeugs (1), mit einem ersten Näherungssensor (20) und einem zweiten Näherungssensor (22), wobei
- jeder der beiden Näherungssensoren (20,22) ein sich im Wesentlichen in einer Y-Richtung (9) erstreckendes, längliches Detektionsfeld (21,23) aufweist,
- das Detektionsfeld (21) des ersten Näherungssensors (20) das Detektionsfeld (23) des zweiten Näherungssensors (22) in Y-Richtung (9) zumindest einseitig um einen Überstand (A) überragt, wobei der Überstand (A) mindestens 5% und maximal 33% der Länge des ersten Näherungssensors (22) in Y-Richtung (9) beträgt, und
- das Detektionsfeld (21) des ersten Näherungssensors (20) oberhalb des Detektionsfelds (23) des zweiten Näherungssensors (22) angeordnet ist,
und mit einer Steuereinheit (24) zur Auswertung von Signalen (S1,S2) der Näherungssensoren (20,22) und zur Ausgabe eines die Betätigung der Fahrzeugtür (3) veranlassenden Auslösesignals (Sa), wobei die Steuereinheit (24) dazu ausgebildet ist, mindestens einen Zeitversatz (T1,T2) zwischen den jeweiligen Signalen (S1,S2) der beiden Näherungssensoren (20,22) zu detektieren, und das Auslösesignal (Sa) dann auszugeben, wenn der oder jeder detektierte Zeitversatz (T1,T2) ein vorgegebenes Auslösekriterium erfüllt.

2. Sensoreinheit (2) nach Anspruch 1,
wobei das Detektionsfeld (21) des ersten Näherungssensors (20) das Detektionsfeld (23) des zweiten Näherungssensors (22) in Y-Richtung beidendseitig, insbesondere um jeweils etwa den gleichen Überstand (A), überragt.

3. Sensoreinheit (2) nach Anspruch 1 oder 2,
wobei der Überstand (A) mindestens 10% der Länge des ersten Näherungssensors (22) in Y-Richtung (9) beträgt.

4. Sensoreinheit (2) nach einem der Ansprüche 1 bis 3,
wobei die Näherungssensoren (20,22) an oder in einem hinteren Stoßfänger (11) des Fahrzeugs (1) angeordnet sind.

5. Sensoreinheit (2) nach einem der Ansprüche 1 bis 4,
wobei die Steuereinheit (24) dazu ausgebildet ist,
- einen ersten Zeitversatz (T1) zwischen den steigenden Flanken der jeweiligen Signale (S1, S2) der Näherungssensoren (20,22) und einen zweiten Zeitversatz (T2) zwischen den fallenden Flanken der jeweiligen Signale (S1, S2) der Näherungssensoren (20,22) zu detektieren,
- den ersten und zweiten Zeitversatz (T1,T2) mit jeweils zugeordneten Schwellwerten zu vergleichen, und
- das Auslösesignal (Sa) nur dann auszugeben, wenn die Steuereinheit (24) weder für den ersten Zeitversatz (T1) noch für den zweiten Zeitversatz (T2) eine Schwellwertüberschreitung feststellt.

6. Sensoreinheit (2) nach einem der Ansprüche 1 bis 5,
wobei die beiden Näherungssensoren (20,22) als kapazitive Näherungssensoren ausgebildet sind.

7. Fahrzeug (1), insbesondere Kraftfahrzeug, mit einer Fahrzeugtür, insbesondere einer Heckklappe (3), und einer Sensoreinheit (2) nach einem der Ansprüche 1 bis 6 zur berührungslosen Betätigen der Fahrzeugtür (3).

8. Verfahren für eine berührungslose Betätigung einer Fahrzeugtür (3) mittels einer Sensoreinheit (2) nach einem der Ansprüche 1 bis 6,
bei welchem mindestens ein Zeitversatz (T1,T2) zwischen jeweiligen Signalen (S1,S2) der beiden Näherungssensoren (20,22) detektiert wird, und bei welchem ein die Betätigung der Fahrzeugtür (3) veranlassendes Auslösesignal (Sa) dann ausgegeben wird, wenn der oder jeder detektierte Zeitversatz (T1,T2) ein vorgegebenes Auslösekriterium erfüllt.

9. Verfahren nach Anspruch 8,
bei welchem
- ein erster Zeitversatz (T1) zwischen den steigenden Flanken der jeweiligen Signale (S1, S2) der Näherungssensoren (20,22) und ein zweiter Zeitversatz (T2) zwischen den fallenden Flanken der jeweiligen Signale (S1, S2) der Näherungssensoren (20,22) detektiert wird,
- der erste und zweite Zeitversatz (T1,T2) mit jeweils zugeordneten Schwellwerten verglichen wird, und
- das Auslösesignal (Sa) nur dann ausgegeben wird, wenn weder für den ersten Zeitversatz (T1) noch für den zweiten Zeitversatz (T2) eine Schwellwertüberschreitung festgestellt wird.

## Claims

1. Sensor unit (2) for contactlessly actuating a vehicle door (3) of a vehicle (1), having a first proximity sensor (20) and a second proximity sensor (22), wherein
- each of the two proximity sensors (20, 22) has an elongate detection field (21, 23) extending substantially in a Y direction (9),
- the detection field (21) of the first proximity sensor (20) projects beyond the detection field (23) of the second proximity sensor (22) at least on one side in the Y direction (9) by an excess distance (A), wherein the excess distance (A) is at least 5% and at most 33% of the length of the first proximity sensor (22) in the Y direction (9), and
- the detection field (21) of the first proximity sensor (20) is arranged above the detection field (23) of the second proximity sensor (22),
and having a control unit (24) for evaluating signals (S1, S2) from the proximity sensors (20, 22) and for outputting a tripping signal (Sa) that brings about the actuation of the vehicle door (3), wherein the control unit (24) is designed to detect at least one time offset (T1, T2) between the respective signals (S1, S2) from the two proximity sensors (20, 22), and to output the tripping signal (Sa) if the or each detected time offset (T1, T2) meets a predefined tripping criterion.

2. Sensor unit (2) according to Claim 1,
wherein the detection field (21) of the first proximity sensor (20) projects beyond the detection field (23) of the second proximity sensor (22) on both sides in the Y direction, in particular by approximately the same excess distance (A) in each case.

3. Sensor unit (2) according to Claim 1 or 2,
wherein the excess distance (A) is at least 10% of the length of the first proximity sensor (22) in the Y direction (9).

4. Sensor unit (2) according to one of Claims 1 to 3, wherein the proximity sensors (20, 22) are arranged on or in a rear bumper (11) of the vehicle (1).

5. Sensor unit (2) according to one of Claims 1 to 4, wherein the control unit (24) is designed
- to detect a first time offset (T1) between the rising edges of the respective signals (S1, S2) from the proximity sensors (20, 22) and a second time offset (T2) between the falling edges of the respective signals (S1, S2) from the proximity sensors (20, 22),
- to compare the first and second time offsets (T1, T2) with respectively assigned threshold values, and
- to output the tripping signal (Sa) only if the control unit (24) determines that neither the first time offset (T1) nor the second time offset (T2) exceeds its respectively assigned threshold value.

6. Sensor unit (2) according to one of Claims 1 to 5, wherein the two proximity sensors (20, 22) are in the form of capacitive proximity sensors.

7. Vehicle (1), in particular motor vehicle, having a vehicle door, in particular a tailgate (3), and a sensor unit (2) according to one of Claims 1 to 6 for contactlessly actuating the vehicle door (3).

8. Method for contactlessly actuating a vehicle door (3) by means of a sensor unit (2) according to one of Claims 1 to 6,
in which method at least one time offset (T1, T2) between respective signals (S1, S2) from the two proximity sensors (20, 22) is detected, and in which method a tripping signal (Sa) that brings about the actuation of the vehicle door (3) is output if the or each detected time offset (T1, T2) meets a predefined tripping criterion.

9. Method according to Claim 8,
in which
- a first time offset (T1) between the rising edges of the respective signals (S1, S2) from the proximity sensors (20, 22) and a second time offset (T2) between the falling edges of the respective signals (S1, S2) from the proximity sensors (20, 22) are detected,
- the first and second time offsets (T1, T2) are compared with respectively assigned threshold values, and
- the tripping signal (Sa) is output only if it is determined that neither the first time offset (T1) nor the second time offset (T2) exceeds its respectively assigned threshold value.

## Revendications

1. Unité de détection (2) pour l'actionnement sans contact une portière (3) de véhicule (1), comprenant un premier détecteur de proximité (20) et un deuxième détecteur de proximité (22),
- chacun des deux détecteurs de proximité (20, 22) présentant un champ de détection allongé (21, 23) qui s'étend essentiellement dans une direction Y (9),
- le champ de détection (21) du premier détecteur de proximité (20) dépassant au moins d'un côté le champ de détection (23) du deuxième détecteur de proximité (22) dans la direction Y (9), d'une valeur de dépassement (A), la valeur de dépassement (A) représentant au moins 5% et au maximum 33% de la longueur du premier détecteur de proximité (22) dans la direction Y (9), et
- le champ de détection (21) du premier détecteur de proximité (20) est disposé au-dessus du champ de détection (23) du deuxième détecteur de proximité (22), et
comprenant une unité de commande (24) pour évaluer des signaux (S1, S2) des détecteurs de proximité (20, 22) et pour émettre un signal de déclenchement (Sa) provoquant l'actionnement de la portière du véhicule (3), l'unité de commande (24) étant configurée pour détecter au moins un décalage de temps (T1, T2) entre les signaux (S1, S2) respectifs des deux détecteurs de proximité (20, 22), et délivrer le signal de déclenchement (Sa) lorsque le ou chaque décalage de temps (T1, T2) détecté satisfait à un critère de déclenchement prédéterminé.

2. Unité de détection (2) selon la revendication 1,
le champ de détection (21) du premier détecteur de proximité (20) dépassant le champ de détection (23) du deuxième détecteur de proximité (22) dans la direction Y des deux côtés, en particulier à chaque fois d'environ la même valeur de dépassement (A).

3. Unité de détection (2) selon la revendication 1 ou la revendication 2,
la valeur de dépassement (A) représentant au moins 10% de la longueur du premier détecteur de proximité (22) dans la direction Y (9).

4. Unité de détection (2) selon l'une des revendications 1 à 3,
les détecteurs de proximité (20, 22) étant agencés sur ou dans un pare-chocs arrière (11) du véhicule (1).

5. Unité de détection (2) selon l'une des revendications 1 à 4,
l'unité de commande (24) étant configurée pour
- détecter un premier décalage de temps (T1) entre les flancs montants des signaux respectifs (S1, S2) des détecteurs de proximité (20, 22) et un deuxième décalage de temps (T2) entre les flancs descendants des signaux respectifs (S1, S2) des détecteurs de proximité (20, 22),
- comparer les premier et deuxième décalages de temps (T1, T2) à des valeurs de seuil respectives associées, et
- ne délivrer le signal de déclenchement (Sa) que lorsque l'unité de commande (24) ne constate de dépassement de valeur de seuil ni pour le premier décalage de temps (T1) ni pour le deuxième décalage de temps (T2).

6. Unité de détection (2) selon l'une des revendications 1 à 5,
dans laquelle les deux détecteurs de proximité (20, 22) sont des détecteurs de proximité capacitifs.

7. Véhicule (1), notamment véhicule automobile, comprenant une portière de véhicule, notamment un hayon (3), et une unité de détection (2) selon l'une des revendications 1 à 6 pour l'actionnement sans contact de la portière (3) du véhicule.

8. Procédé d'actionnement sans contact d'une portière de véhicule (3) au moyen d'une unité de détection (2) selon l'une des revendications 1 à 6,
dans lequel on détecte au moins un décalage de temps (T1, T2) entre des signaux (S1, S2) respectifs des deux détecteurs de proximité (20, 22), et dans lequel on émet un signal de déclenchement (Sa) engendrant l'actionnement de la portière de véhicule (3) lorsque le ou chaque décalage de temps (T1, T2) détecté satisfait à un critère de déclenchement prédéterminé.

9. Procédé selon la revendication 8,
dans lequel
- un premier décalage de temps (T1) est détecté entre les flancs montants des signaux (S1, S2) respectifs des détecteurs de proximité (20, 22) et un deuxième décalage de temps (T2) est détecté entre les flancs descendants des signaux respectifs (S1, S2) des détecteurs de proximité (20, 22),
- les premier et deuxième décalages de temps (T1, T2) sont comparés à des valeurs de seuil respectives associées, et
- le signal de déclenchement (Sa) n'est délivré que lorsqu'un dépassement de la valeur seuil n'est constaté ni pour le premier décalage de temps (T1) ni pour le deuxième décalage de temps (T2).
